(19)

**Europäisches Patentamt**
**European Patent Office**
**Office européen des brevets**

(11) **EP 1 134 865 B1**

(12) **EUROPEAN PATENT SPECIFICATION**

(45) Date of publication and mention of the grant of the patent:
**05.03.2008 Bulletin 2008/10**

(51) Int Cl.:
*G01R 31/08* (2006.01)   *H02H 5/10* (2006.01)

(21) Application number: **01000041.2**

(22) Date of filing: **06.03.2001**

(54) **Detecting wire break in electrical network**

Drahtbruchdetektion in einem elektrischen Netz

Détection de la rupture du fil dans un réseau électrique

(84) Designated Contracting States:
**DE FR GB**

(30) Priority: **10.03.2000 FI 20000560**

(43) Date of publication of application:
**19.09.2001 Bulletin 2001/38**

(73) Proprietor: **ABB Oy**
**00380 Helsinki (FI)**

(72) Inventors:
• **Hänninen, Seppo**
**00300, Helsinki (FI)**
• **Lehtonen, Matti**
**02200, Espoo (FI)**

(74) Representative: **Äkräs, Tapio Juhani**
**Kolster Oy Ab,**
**Iso Roobertinkatu 23**
**00120 Helsinki (FI)**

(56) References cited:
**EP-A- 0 276 181     WO-A-99/10753**

• **LEE R E ET AL: "PERFORMANCE TESTING OF THE RATIO GROUND RELAY ON A FOUR-WIRE DISTRIBUTION FEEDER" IEEE TRANSACTIONS ON POWER APPARATUS AND SYSTEMS, IEEE INC. NEW YORK, US, vol. PAS-102, no. 9, September 1983 (1983-09), pages 2943-2949, XP001002916 ISSN: 0018-9510**

**Description**

BACKGROUND OF THE INVENTION

The invention relates to electrical networks, and particularly to detecting a wire break in an electrical network.

As a result of a phase wire break in an electricity distribution network, the wire may fall upon a base which has poor conductivity, or the wire may remain hanging in the air, or, in the case of the broken wire being a covered overhead wire, fault currents may not necessarily be high enough so as to enable a common relay protection to detect the fault. The live wire is thus dangerous to its environment.

A prior art solution is a definite-time line protection relay for indicating asymmetrical load that detects asymmetrical load by monitoring the extreme values of basic-frequency phase currents:

$$\Delta I = \frac{I_{max} - I_{min}}{I_{max}} * 100\% , \qquad\qquad (1)$$

wherein $\Delta I$ is the difference, presented percentage-wise, between the highest phase current value $I_{max}$ and the lowest phase current $I_{min}$ measured at the same time. If the asymmetrical load exceeds a predetermined operating value, the unit becomes activated and an operation counter will be switched on. Owing to the normal asymmetrical load of the network, the setting range of the operating current is usually 10 to 60%, and the operating delay of the asymmetrical load unit can be set e.g. between 1 to 300 s.

EP0276181 discloses a solution for searching for faulty conductor(s) of an electrical line affected by an asymmetrical fault. Publication "Performance testing of the ratio ground relay on a four-wire distribution feeder" by Lee, R. E & Bishop, M. T. in IEEE Transactions on Power Apparatuses and Systems, Vol. PAS-102, No. 9, September 1983, pp. 2943 to 2949 discloses an electro-mechanical ratio ground relay RGR also more suited for identifying a wire break. The relay detects a fault if a ratio $(3I_0/I_1)$ between the zero current measured in the beginning of a feeder and the positive sequence component of the current exceeds a pre-adjusted value. The relay comprises two windings operating on the electromagnetic induction principle, one winding producing $(3I_0)^2$ proportional torque and the other winding producing $(I_1)^2 - (I_2)^2$ proportional resistant moment. The torques effective in opposite directions produce the working characteristic of the relay based on which the triggering of the relay can be adjusted. The relay is designated for a resistance-grounded network, i.e. a four-wire system.

Publication "Unique aspects of distribution system harmonics due to high impedance ground faults" by Jeerings, D. I. & Linders, J. R. in IEEE Transactions on Power Delivery, vol. 5, no. 2, April 1990, pp. 1086 to 1094, discloses an idea of an earth fault relay whose operation is based on indicating a third harmonic wave. When a live wire comes into contact with the ground, the non-linear impedance of the ground and the electric arc generated in the contact provide harmonic waves to the zero current. The harmonic content increases as the fault impedance increases. A high-impedance earth fault can be identified on the basis of a change in the phasor of the third harmonic wave of the current and the direction of the fault current can be identified on the basis of measuring the harmonic impedance. A faulty phase is identified from the ratio between the zero and positive components of the third harmonic wave. By using phasor quantities, the harmonic waves caused by a phase-to-earth fault (e.g. wire break with ground contact) and a three-phase industrial load can be separated from each other.

In addition to the above-mentioned prior art relay applications, techniques currently being developed are also known that are based on the fact that a wire break causes a high-impedance restriking earth fault, in which case the fault in question can be detected from a change in the level of the harmonic components in the current and the simultaneous change in the load current. The behaviour of the harmonics can be analyzed by means of e.g. Fourier, wavelet, chaos theory, neural network and artificial intelligence methods.

The problem with the arrangements described above is that they usually require an extremely low-impedance earth fault or a relatively high load behind the fault site in order to be able to detect a wire break. Malfunctions may also be caused by common operational procedures of the network, such as connecting an unloaded transformer to the network, changes in connecting situations, changes in the positions of on-load tap-changers in power transformers, connecting and disconnecting compensating capacitors to and from the network, special loads and the fact that high-impedance faults usually cause similar phenomena in the network, which means that distinguishing a phase break from those phenomena is unreliable. Furthermore, many prior art methods are intended to operate in networks wherein the neutral point is connected to the ground through a small resistance, which means that they do not necessarily operate in a network which is isolated from the ground or equipped with a compensating choke for the earth fault current.

BRIEF DESCRIPTION OF THE INVENTION

An object of the invention is thus to provide a method and an apparatus implementing the method so as to alleviate the above-mentioned problems. The object of the invention is achieved by a method and system which are characterized by what is disclosed in independent claims 1 and 9. Preferred embodiments of the invention are disclosed in the dependent claims.

The invention is based on detecting changes in basic-frequency load currents. A crucial point in the method of the invention is to be able to distinguish when current changes are caused by a wire break. According to the invention, a wire break is identified when the current of one phase of a feeder drops in a short time more than a given limit value and the phase angle between the currents of two other phases increases more than a given limit value. Furthermore, according to a preferred embodiment of the invention, the angle between the current change phasors of these other two phases must be substantially unequal to 60 degrees.

An advantage of the method and system of the invention is that they enable a wire break in an electrical network to be detected more sensitively and reliably than the prior art solutions. The invention makes electrical networks easier to operate and use, making them safer as regards public and environmental safety. The method of the invention can be directly applied to existing programmable line protection relays. In its basic form, the method operates independently in feeder-specific protective relays, without needing information from the relays of adjacent feeders or higher-level automation system in order to be able to identify a wire break.

BRIEF DESCRIPTION OF THE DRAWINGS

The invention is now described in closer detail in connection with the preferred embodiments and with reference to the accompanying drawings, in which

Figure 1 shows a model of an electrical network wherein a wire break occurs,
Figure 2 shows a phasor diagram of load currents of a feeder when phase R has a wire break,
Figure 3 shows the effect of a change in the phase angle of the load on the change in the phase angle between healthy phases when the wire break has occurred.

DETAILED DESCRIPTION OF THE INVENTION

In the following, the invention will be described mainly in connection with a medium-voltage electricity distribution network isolated from the ground. The invention is not, however, to be restricted to any particular network type or voltage level.

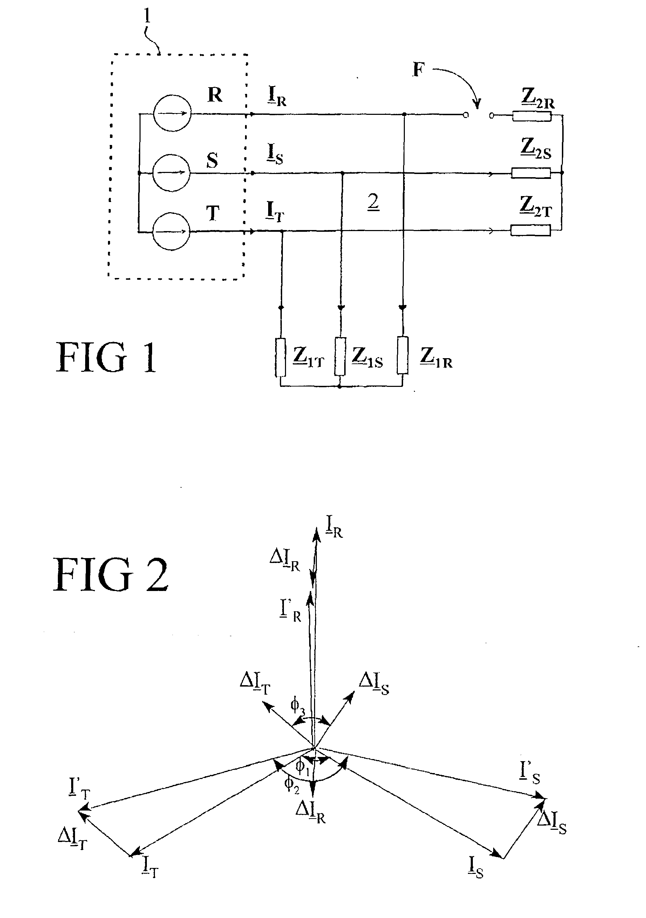

Figure 1 shows a simplified example of an electrical network comprising three phases R, S and T and a supply point 1, which is e.g. a substation and which receives its input e.g. from a transformer or another substation (not shown). Furthermore, Figure 1 shows a feeder 2 wherein a wire break F occurs in phase R. The loads of the feeder 2 are described by impedances $\underline{Z}_{1R}, \underline{Z}_{2R}$ (phase R), $\underline{Z}_{1S}$, $\underline{Z}_{2S}$ (phase S) and $\underline{Z}_{1T}$, $\underline{Z}_{2T}$ (phase T). The figure also shows currents $\underline{I}_R$, $\underline{I}_S$ and $\underline{I}_T$ supplied from the supply point 1 to the feeder 2. It is to be noted that the figure only shows elements relevant to the understanding of the invention, and it is obvious that there may be an arbitrary number of feeders from the supply point, for instance.

According to the basic idea of the invention, the wire break F is identified on the basis of the fact that the current $\underline{I}_R$ of the faulty phase R of the feeder 2 drops in a short time more than a given limit-value and the phase angle between the currents $\underline{I}_S$ and $\underline{I}_T$ of the two other phases S and T increases more than a given limit value. Furthermore, the angle between the current change phasors of these other two phases must preferably be substantially unequal to 60 degrees.

According to a preferred embodiment of the invention, a condition for detecting a wire break is that it is first detected that the feeder 2 has an asymmetrical fault. The asymmetrical fault is preferably detected when a change in the absolute value of the current of any of the phases R, S or T in the three-phase system exceeds a given limit value k in a very short time (e.g. during time corresponding to 2 or 3 network sequences, i.e. 50 Hz, in a nominal frequency system about 40 to 60 ms) and differs from corresponding changes in currents of the rest of the phases, being e.g. at least 50% greater. This can be determined when the following two conditions a) and b) are simultaneously valid:

a)

$$\left| \Delta \underline{I}_R \right| \geq k \quad \text{or} \quad \left| \Delta \underline{I}_S \right| \geq k \quad \text{or} \quad \left| \Delta \underline{I}_T \right| \geq k \qquad (2)$$

b)

$$\left|\Delta \underline{I}_R\right| \neq \left|\Delta \underline{I}_S\right| \quad \text{or} \quad \left|\Delta \underline{I}_R\right| \neq \left|\Delta \underline{I}_T\right| \quad \text{or} \quad \left|\Delta \underline{I}_S\right| \neq \left|\Delta \underline{I}_T\right|, \tag{3}$$

wherein $\triangle I_R$, $\triangle I_S$ and $\triangle I_T$ refer to measured changes in the currents of phases R, S and T. The purpose of the above-described step is to distinguish the three-phase connections of symmetrical load, such as changes in the switching mode of the network performed e.g. by disconnector controls, from the events to be analyzed, which could otherwise be wrongly interpreted as a wire break. An asymmetrical fault can also be detected using another method; in the case of wire fault, for instance, the value of a negative sequence component in the symmetrical three-phase system changes. The asymmetrical fault can then also be detected from the change in the negative sequence component. However, since the earth fault also causes a change in the negative sequence component, a possible earth fault occurred at an adjacent output could then produce an erroneous interpretation.

Furthermore, according to a preferred embodiment of the invention, when it is detected that the feeder has an asymmetrical fault and if a ground contact is associated with the fault, the faulty phase will be identified next. In the case of low-impedance earth fault, the faulty phase is identified e.g. from the fact that the absolute value of the voltage of a phase is decreased by half or more of its normal state value, i.e. the following condition is valid:

$$\left|\underline{U}_v\right| \leq 0.5\left|\underline{U}_{vn}\right|, \tag{4}$$

wherein $\underline{U}_v$ = the voltage of phase R, S or T, and
$\underline{U}_{vn}$ = nominal value of phase voltage.
In the case of high-impedance earth faults, wherein equation (4) is invalid for the voltage of all phases, the faulty phase is identified e.g. by comparing the absolute values of the changes in the phase currents. In practice this refers to faults in which the fault resistance exceeds 5 kΩ. In the symmetrical three-phase system, a faulty phase is assumed to be the phase whose absolute value of the phase current change differs most from the corresponding simultaneous changes in the phase current of the two other phases. This deviation is detected from the fact that the change in the current of the faulty phase is a factor in the two largest differences between the changes in the phase currents:

$$\left\|\Delta \underline{I}_R\right| - \left|\Delta \underline{I}_S\right\|, \quad \left\|\Delta \underline{I}_R\right| - \left|\Delta \underline{I}_T\right\| \quad \text{and} \quad \left\|\Delta \underline{I}_S\right| - \left|\Delta \underline{I}_T\right\| \tag{5}$$

The breaking of the phase wire usually also causes an earth fault when the broken wire comes into contact with the ground. The earth fault, in turn, causes a zero current component to the currents of the phases of the feeder. Since the basic idea of the invention is based on changes in the load currents of the phases of the feeder, it is preferable that a possible zero current component is removed from the measured current values. The zero current change supplied by a background network, i.e. a network part external to the feeder, is removed from the current change of the faulty phase e.g. according to the following equation:

$$\Delta \underline{I}_{vm} = \Delta \underline{I}_{vv} - 3\Delta \underline{I}_0, \tag{6}$$

wherein $\Delta \underline{I}_{vm}$ = the change in the phase current, from which the zero current supplied by the background network is removed,
$\Delta \underline{I}_{vv}$ = the change in the current of the faulty phase, and
$\Delta \underline{I}_0$ = the change in the zero current measured in the beginning of the feeder.
Furthermore, according to a preferred embodiment of the invention, if the value of the zero impedance of the feeder is available, the sensitivity of the method can be improved by also removing the zero current supplied by the output itself from the phase currents. Consequently, the only current change that remains from the current change is the one owing to the change in the load. The value of the zero impedance of the feeder can be obtained e.g. from the network data system of the electrical network or otherwise. The faulty phase is compensated for e.g. by applying equation (7), and the healthy phases are compensated for e.g. by applying equation (8) as follows:

$$\Delta \underline{I}_{vmv} = \Delta \underline{I}_{vm} - 2\Delta \underline{U}_0 \big/ 3Z_{0j} \tag{7}$$

$$\Delta \underline{I}_{vmt} = \Delta \underline{I}_{vt} + \Delta \underline{U}_0 \big/ 3Z_{0j} \tag{8}$$

wherein $\triangle \underline{I}_{vmv}$ = the phase current change in the faulty phase owing to the change in load,
$\Delta \underline{I}_{vmt}$ = the phase current change in the healthy phase owing to
the change in load,
$\Delta \underline{I}_{vt}$ = the current change in the healthy phase,
$\Delta \underline{U}_0$ = the change in zero voltage, and
$\Delta \underline{Z}_{0j}$ = zero impedance of the feeder.

The meaning of equations (7) and (8) is thus the fact that they remove the effect the earth capacitances and the leakage resistances of the normal state of the line from the measured phase current changes. If, in the case of earth fault, only the earth fault current supplied by the background network is compensated for, the method can be used for identifying wire breaks wherein the change in the absolute value of the load current exceeds two thirds of the earth fault current supplied by the output itself.

According to the invention, the wire break is identified on the basis of the fact that the current of the faulty phase drops in a short time more than a given limit value and the phase angle between the currents of the other two phases increases more than a given limit value. In addition, the angle between the current change phasors of these other two phases should preferably be substantially unequal to 60 degrees, preferably unequal to $60°\pm5°$. The following equation is obtained for the current of the faulty phase:

$$\left| \underline{I}_v \right| - \left| \underline{I}_v - \Delta \underline{I}_{vm} \right| > \varepsilon , \qquad \varepsilon > 0 \tag{9}$$

wherein $\varepsilon$ is the limit value of the current change of the faulty phase, and
$\underline{I}_v$ is the current of the faulty phase before the phase break.

In equation (9), $\Delta \underline{I}_{vm}$ is replaced by current change $\Delta \underline{I}_{vmv}$ according to equation (7) if the output-specific values of the zero impedance are available. The angle criteria of the currents of the healthy phases are as follows:

$$\phi_2 - \phi_1 > \Delta\phi, \qquad\qquad \Delta\phi > 0 \tag{10}$$

$$\phi_3 \neq 60°\pm5° \tag{11}$$

wherein $\Delta\phi$ is the limit value of the angle change between the healthy phases caused by the wire break,
$\phi_1$ is the angle between the currents of the healthy phases before the wire break,
$\phi_2$ is the angle between the currents of the healthy phases after the wire break, and
$\phi_3$ is the angle between the current changes of the healthy phases.

The phasor diagram of Figure 2 illustrates the effect of the wire break on the phase angles of the load currents of the healthy phases. In the case of Figure 2, the wire break of phase R is simulated using a computer program. The phase currents of the feeder before the break are $\underline{I}_R$, $\underline{I}_S$ and $\underline{I}_T$, and after the break $\underline{I}'_R$, $\underline{I}'_S$ and $\underline{I}'_T$. There is only inductive load behind the break, its proportion being about 20% of the total load of the output. In the case of Figure 1, no earth break is associated with the wire break, so the changes in phase currents $\Delta \underline{I}_R$, $\Delta \underline{I}_S$ and $\Delta \underline{I}_T$ are caused by the change in the load only.

The changes in the currents and voltages including their phase angles are calculated as a difference in comparison to the corresponding values of the registered currents and voltages before the change. The main task of the method of the invention is to identify a wire break when the normal protection functions of the line protection relay have failed to detect the fault. The method can also be employed in such fault cases wherein a breaker has remained closed after an automatic reclosing procedure. In such as case, sampling during the fault has to be synchronized with the time after the reclosings.

The decrease in the load current of the faulty phase is directly proportional to the proportion of the load $Z_2$ ($\underline{Z}_{2R}$, $\underline{Z}_{2S}$ and $\underline{Z}_{2T}$), which is left behind the break, to the proportion of the total load $Z_1$ ($\underline{Z}_{1R}$, $\underline{Z}_{1s}$ and $\underline{Z}_{1T}$) + $Z_2$ of the feeder 2. A rough estimation of the distance of the fault may also be inferred from the change of the current. The effect of the wire break F on the phase angles of the load currents of the healthy phases can be examined by means of Figure 1, which shows a model of the network when a break has occurred in phase R. In the model, it is assumed that the impedance of the load remains constant and that the power factor is the same in network parts on different sides of the break F. In the exemplary case, load current changes of different sizes (equation (9)) and the corresponding phase angle changes (equation (10)) can be provided with values according to the following table:

| Current change (%) | Angle change (degrees) |
| --- | --- |
| 1 | 0,5 |
| 2 | 1,0 |
| 4 | 2,0 |
| 10 | 5,1 |
| 20 | 10,4 |
| 30 | 16,0 |

The use of the method requires that the values of the phase currents and voltages as well as the changes therein should be known as accurately as possible since according to the invention, the detection sensitivity of the wire break substantially depends on the accuracy within which the changes can be detected.

The low-voltage networks used e.g. in Finland are usually connected to a medium-voltage distribution network through a Dyn-connected distribution transformer such that each phase in a low-voltage network receives its current from two phases of a medium-voltage network. In the network part behind the wire break, for a third of the consumers the consumer voltage is thus of a normal magnitude, whereas for the rest 67% of the consumers the voltage drops to about 58%. As the voltage drops, the consumer effective current increases while the reactive current mostly decreases. The increase of the effective current in the healthy phases could also possibly be used as a criterion for indicating a wire break. Because the customers have different needs, the dependency of the load on the voltage varies greatly, which makes the criterion difficult to apply.

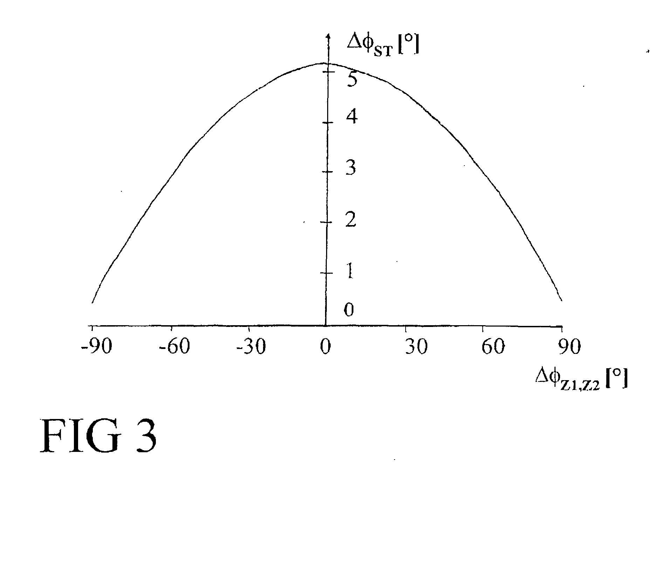

In practice, the phase angle between the healthy phases is an insensitive criterion for the behaviour of the load in fault situations. The increase in the effective current also causes the phase angle difference to increase. Since the reactive current correspondingly decreases, the phase angle between impedances $Z_1$ and $Z_2$ changes as well. Figure 3 illustrates the effect of the change on the phase angle criterion, showing the effect of the phase angle change of the load on the phase angle change between the healthy phases after the wire break has occurred. The horizontal axis describes the phase angle change of the load. In the exemplary case, the current change of the faulty phase is 10%, i.e. 10% of the load remains behind the break. In practice, the phase angle of the network impedances changes no more than 20 to 30 degrees owing to the fault. The effect thus remains insignificantly low as far as the phase angle criterion is concerned.

If a load of equal magnitude is disconnected from two phases from the low-voltage network side, a similar change in currents and voltages will occur on the primary side to that of the wire break on the primary side. In order to avoid erroneous operation of the algorithm caused by the exactly simultaneous disconnection of the loads of the two phases on the secondary side, the angle between the current changes of the phases that are assumed to be healthy must be unequal to about $60\pm5$ degrees; this causes condition (11).

The algorithm generated on the basis of the method of the invention can be installed in the existing programmable line protection relays as an operation block. In its basic form, the method operates independently in the protection relays of outputs, without needing information from the relays of adjacent feeders or higher-level automation system in order to identify a wire break.

It is obvious to one skilled in the art that as technology advances, the basic idea of the invention can be implemented in many different ways. The invention and its embodiments are thus not restricted to the above-described examples but they may vary within the scope of the claims.

**Claims**

1.  A method for detecting a wire break in a three-phase electrical network comprising at least one feeder (2) going out from a supply point (1), the method comprising the step of

    monitoring values ($\underline{I}_R$, $\underline{I}_S$ and $\underline{I}_T$) of currents of phases (R, S, T) of the feeder or quantities corresponding thereto, **characterized by** the method further comprising the step of

    detecting that a wire break (F) occurs at the feeder if, during a predetermined time, the current value of one phase drops more than a predetermined limit value and the phase angle between the current values of the other two phases increases more than a predetermined limit value.

2.  A method as claimed in claim 1, **characterized by** monitoring the current values ($\underline{I}_R$, $\underline{I}_S$ and $\underline{I}_T$) or corresponding quantities of the phases (R, S, T) of the feeder (2) until it is detected that the feeder has an asymmetrical fault, whereby it is detected that a wire break occurs at the feeder if, during a predetermined time, the current value of one phase has dropped more than the predetermined limit value and the phase angle between the current values of the other two phases has increased more than the predetermined limit value.

3.  A method as claimed in claim 2, **characterized by** said asymmetrical fault being detected if the change in the absolute value of the current value of any phase of the feeder (2) during the predetermined time is greater than the predetermined limit value and, in addition, different from the corresponding changes in the absolute values of the current values of the rest of the phases of the feeder.

4.  A method as claimed in claim 1, 2 or 3, **characterized by** detecting that the feeder (2) has a wire break only if, in addition, the angle between the change values of the current values of said other two phases is substantially unequal to 60°, preferably unequal to 55° to 65°.

5.  A method as claimed in claim 2, 3 or 4, **characterized by** further comprising the step of

    identifying a faulty phase when it has been detected that the feeder (2) has an asymmetrical fault, whereby it is detected that a wire break occurs at the feeder if the current value of the phase identified as faulty during the predetermined time has dropped more than the predetermined limit value and the phase angle between the phase values of healthy phases has increased more than the predetermined limit value.

6.  A method as claimed in claim 5, **characterized by** identifying as faulty the phase whose absolute value of the voltage has dropped to half or more from the value of the normal state thereof or whose absolute value of the change in the phase current value differs most from the absolute values of the corresponding changes in phase current changes of the other two phases.

7.  A method as claimed in claim 5 or 6, **characterized by** detecting that a wire break occurs at the feeder (2) only if, in addition, the angle between the change values of the current values of the healthy phases is substantially unequal to 60°, preferably unequal to 55° to 65°.

8.  A method as claimed in claim 5, 6 or 7, **characterized by** further comprising the step of, after identifying the faulty phase,

    removing zero current caused by a possible earth fault occurring at the feeder (2) and supplied by a network part external to the feeder, i.e. a background network, from the current value of the faulty phase or

    removing the zero current caused by a possible earth fault occurring at the feeder (2) and supplied by a network part external to the feeder, i.e. a background network, from the current value of the faulty phase and the zero current supplied by the feeder itself from the current values of all phases.

9.  A system for detecting a wire break in a three-phase (R, S, T) electrical network comprising at least one feeder (2) going out from a supply point (1), the system comprising

    means for monitoring values ($\underline{I}_R$, $\underline{I}_S$ and $\underline{I}_T$) of currents of phases of the feeder or quantities corresponding thereto, **characterized in that** the system further comprises

    means for detecting that a wire break (F) occurs at the feeder if, during a predetermined time, the current value of one phase drops more than a predetermined limit value and the phase angle between the current values increases more than a predetermined limit value.

10. A system as claimed in claim 9, **characterized in that** the means for monitoring are arranged to monitor the current values ($\underline{I}_R$, $\underline{I}_S$ and $\underline{I}_T$) or corresponding quantities of the phases (R, S, T) of the feeder (2) until the system detects that the feeder has an asymmetrical fault and, **in that** case, the means for detecting that a wire break occurs are arranged to detect that a wire break occurs at the feeder if, during a predetermined time, the current value of one phase has dropped more than the predetermined limit value and the phase angle between the current values of the other two phases has increased more than the predetermined limit value.

11. A system as claimed in claim 10, **characterized in that** the system comprises means for detecting said asymmetrical fault if the change in the absolute value of the current value of any phase of the feeder (2) during the predetermined time is greater than the predetermined limit value and, in addition, different from the corresponding changes in the absolute values of the current values of the rest of the phases of the feeder.

12. A system as claimed in claims 9, 10 or 11, **characterized in that** the means for detecting that a wire break occurs are arranged to detect that a wire break occurs at the feeder only if, in addition, the angle between the change values of the current values of said other two phases is substantially unequal to 60°, preferably unequal to 55° to 65°.

13. A system as claimed in claims 10, 11 or 12, **characterized in that** the system further comprises means for identifying a faulty phase when the system has detected that the feeder (2) has an asymmetrical fault, whereby the means for detecting that a wire break occurs are arranged to detect that a wire break occurs at the feeder if, during the predetermined time, the current value of the phase identified as faulty has dropped more than the predetermined limit value and the phase angle between the phase values of healthy phases has increased more than the predetermined limit value.

14. A system as claimed in claim 13, **characterized in that** the means for identifying a faulty phase are arranged to identify as faulty the phase whose absolute value of the voltage has dropped to half or more from the value of the normal state thereof or whose absolute value of the change in the phase current value differs most from the absolute values of the corresponding changes in phase current changes of the other two phases.

15. A system as claimed in claim 13 or 14, **characterized in that** the means for detecting that a wire break occurs are arranged to identify that a wire break occurs at the feeder (2) only if, in addition, the angle between the change values of the current values of the healthy phases is substantially unequal to 60°, preferably unequal to 55° to 65°.

16. A system as claimed in claim 13, 14 or 15, **characterized in that in that** the system further comprises means for removing, after the means for identifying have identified the faulty phase, zero current caused by a possible earth fault occurring at the feeder (2) and supplied by a network part external to the feeder, i.e. a background network, from the current value of the faulty phase or means for removing, after the means for identifying have identified the faulty phase, the zero current caused by a possible earth fault occurring at the feeder (2) and supplied by a network part external to the feeder, i.e. a background network, from the current value of the faulty phase and the zero current supplied by the feeder itself from the current values of all phases.

**Patentansprüche**

1. Verfahren zum Entdecken eines Drahtbruches in einem elektrischen Dreiphasennetz, das wenigstens eine aus einer Anschlussquelle (1) kommende Stromzuleitung (2) umfasst, wobei das Verfahren folgenden Schritt umfasst:

   Überwachen von Werten ($I_R$, $I_S$ und $I_T$) von Strömen von Phasen (R, S, T) der Stromzuleitung oder ihnen entsprechenden Größen,

   **dadurch gekennzeichnet, dass** das Verfahren ferner folgenden Schritt umfasst:

   Entdecken, dass ein Drahtbruch (F) bei der Stromzuleitung auftritt, wenn innerhalb einer vorbestimmten Zeit der Stromwert einer Phase stärker fällt als ein vorbestimmter Grenzwert und der Phasenwinkel zwischen den Stromwerten der anderen beiden Phasen stärker ansteigt, als ein vorbestimmter Grenzwert.

2. Verfahren nach Anspruch 1, **gekennzeichnet durch** Überwachen der Stromwerte ($I_R$, $I_S$ und $I_T$) oder entsprechender Größen der Phasen (R, S, T) der Stromzuleitung (2), bis entdeckt wird, dass die Stromzuleitung einen asymmetrischen Fehler aufweist, wodurch festgestellt wird, dass ein Drahtbruch an der Stromzuleitung auftritt, wenn innerhalb einer vorbestimmten Zeit der Stromwert einer Phase stärker gefallen ist als der vorbestimmte Grenzwert und der Phasenwinkel zwischen den Stromwerten der anderen beiden Phasen stärker angestiegen ist als der vorbestimmte Grenzwert.

3. Verfahren nach Anspruch 2, **dadurch gekennzeichnet, dass** der asymmetrische Fehler entdeckt wird, wenn die Änderung des Absolutwertes des Stromwertes irgend einer der Phasen der Stromzuleitung (2) innerhalb der vorbestimmten Zeit größer ist als der vorbestimmte Grenzwert und sich zusätzlich von den entsprechenden Änderungen der Absolutwerte der Stromwerte der restlichen Phasen der Stromzuleitung unterscheidet.

4. Vorrichtung nach Anspruch 1, 2 oder 3, **gekennzeichnet durch** Entdecken, dass die Stromzuleitung (2) nur dann einen Drahtbruch aufweist, wenn zusätzlich der Winkel zwischen den Änderungswerten der Stromwerte der anderen beiden Phasen im wesentlichen ungleich 60°, vorzugsweise ungleich 55° bis 65°, beträgt.

5. Verfahren nach Anspruch 2, 3 oder 4, **gekennzeichnet durch** den weiteren Schritt des
Identifizierens einer fehlerhaften Phase, wenn entdeckt worden ist, dass die Stromzuleitung (2) einen asymmetrischen Fehler aufweist, wodurch entdeckt wird, dass ein Drahtbruch an der Stromzuleitung auftritt, wenn der Stromwert der als fehlerhaft identifizierten Phase innerhalb der vorbestimmten Zeit stärker gefallen ist als der vorbestimmte Grenzwert und der Phasenwinkel zwischen den Phasenwerten intakter Phasen stärker angestiegen ist als der vorbestimmte Grenzwert.

6. Verfahren nach Anspruch 5, **dadurch gekennzeichnet, dass** die Phase als fehlerhaft identifiziert wird, deren Absolutwert der Spannung um die Hälfte oder mehr des Wertes ihres Normalzustands gefallen ist bzw. deren Absolutwert der Änderung im Phasenstromwert sich am stärksten von den Absolutwerten der entsprechenden Änderungen der Phasenstromänderungen der anderen beiden Phasen unterscheidet.

7. Verfahren nach Anspruch 5 oder 6, **gekennzeichnet durch** Entdecken, dass ein Drahtbruch an der Stromzuleitung (2) nur dann auftritt, wenn zusätzlich der Winkel zwischen den Änderungswerten der Stromwerte der intakten Phasen im wesentlichen ungleich 60°, vorzugsweise ungleich 55° bis 65°, beträgt.

8. Verfahren nach Anspruch 5, 6 oder 7, **gekennzeichnet durch** den weiteren Schritt des, nach Identifizieren der fehlerhaften Phase,
Entfernens von Nullstrom, der **durch** einen möglichen, an der Stromzuleitung (2) auftretenden Erdschluss hervorgerufen und von einem Netzwerkteil außerhalb der Stromzuleitung, d.h. einem Hintergrundnetzwerk, zugeführt worden sein kann, vom Stromwert der fehlerhaften Phase oder
Entfernens des Nullstroms, der **durch** einen möglichen, an der Stromzuleitung (2) auftretenden Erdschluss hervorgerufen und von einem Netzwerkteil außerhalb der Stromzuleitung, d.h. einem Hintergrundnetzwerk, zugeführt worden sein kann, vom Stromwert der fehlerhaften Phase und des Nullstroms, der von der Stromzuleitung selbst zugeführt worden ist, von den Stromwerten aller Phasen.

9. System zum Entdecken eines Drahtbruches in einem elektrischen Netz mit drei Phasen (R, S, T), das wenigstens eine aus einer Anschlussquelle (1) kommende Stromzuleitung (2) umfasst, wobei das System umfasst:

Einrichtungen zum Überwachen von Werten ($I_R$, $I_S$ und $I_T$) von Strömen von Phasen der Stromzuleitung oder ihnen entsprechenden Größen,

**dadurch gekennzeichnet dass** das System ferner umfasst:

Einrichtungen zum Entdecken, dass ein Drahtbruch (F) bei der Stromzuleitung auftritt, wenn innerhalb einer vorbestimmten Zeit der Stromwert einer Phase stärker fällt als ein vorbestimmter Grenzwert und der Phasenwinkel zwischen den Stromwerten der anderen beiden Phasen stärker ansteigt, als ein vorbestimmter Grenzwert.

10. System nach Anspruch 9, **dadurch gekennzeichnet, dass** die Einrichtungen zum Überwachen angeordnet sind, um die Stromwerte ($I_R$, $I_S$ und $I_T$) oder entsprechende Größen der Phasen (R, S, T) der Stromzuleitung (2) so lange zu überwachen, bis das System entdeckt, dass die Stromzuleitung einen asymmetrischen Fehler aufweist und in diesem Fall die Einrichtungen zum Erfassen, dass ein Drahtbruch auftritt, angeordnet sind, um zu entdecken, dass ein Drahtbruch an der Stromzuleitung auftritt, wenn innerhalb einer vorbestimmten Zeit der Stromwert einer Phase stärker gefallen ist als der vorbestimmte Grenzwert und der Phasenwinkel zwischen den Stromwerten der anderen beiden Phasen stärker angestiegen ist als der vorbestimmte Grenzwert.

**11.** System nach Anspruch 10, **dadurch gekennzeichnet, dass** das System Einrichtungen zum Entdecken des besagten asymmetrischen Fehlers umfasst, wenn die Änderung des Absolutwertes des Stromwertes irgend einer der Phasen der Stromzuleitung (2) innerhalb der vorbestimmten Zeit größer ist als der vorbestimmte Grenzwert und sich zusätzlich von den entsprechenden Änderungen der Absolutwerte der Stromwerte der übrigen Phasen der Stromzuleitung unterscheidet.

**12.** System nach Anspruch 9, 10 oder 11, **dadurch gekennzeichnet, dass** die Einrichtungen zum Entdecken, dass ein Drahtbruch auftritt, angeordnet sind, um zu entdecken, dass ein Drahtbruch an der Stromzuleitung nur dann auftritt, wenn zusätzlich der Winkel zwischen den Änderungswerten der Stromwerte der besagten anderen beiden Phasen im wesentlichen ungleich 60°, vorzugsweise ungleich 55° bis 65°, beträgt.

**13.** System nach Anspruch 10, 11 oder 12, **dadurch gekennzeichnet, dass** das System ferner umfasst:

Einrichtungen zum Identifizieren einer fehlerhaften Phase, wenn das System entdeckt hat, dass die Stromzuleitung (2) einen asymmetrischen Fehler aufweist, wodurch die Einrichtungen zum Entdecken, dass ein Drahtbruch auftritt, angeordnet sind, um zu entdecken, dass ein Drahtbruch an der Stromzuleitung auftritt, wenn innerhalb der vorbestimmten Zeit der Stromwert der als fehlerhaft identifizierten Phase stärker gefallen ist als der vorbestimmte Grenzwert und der Phasenwinkel zwischen den Phasenwerten intakter Phasen stärker angestiegen ist als der vorbestimmte Grenzwert.

**14.** System nach Anspruch 13, **dadurch gekennzeichnet, dass** die Einrichtungen zum Identifizieren einer fehlerhaften Phase angeordnet sind, um die Phase als fehlerhaft zu identifizieren, deren Absolutwert der Spannung um die Hälfte oder mehr des Wertes ihres Normalzustands gefallen ist bzw. deren Absolutwert der Änderung des Phasenstromwertes sich am stärksten von den Absolutwerten der entsprechenden Änderungen der Phasenstromänderungen der anderen beiden Phasen unterscheidet.

**15.** System nach Anspruch 13 oder 14, **dadurch gekennzeichnet, dass** die Einrichtungen zum Entdecken, dass ein Drahtbruch auftritt, angeordnet sind, um zu identifizieren, dass ein Drahtbruch an der Stromzuleitung (2) nur dann auftritt, wenn zusätzlich der Winkel zwischen den Änderungswerten der Stromwerte der intakten Phasen im wesentlichen ungleich 60°, vorzugsweise 55° bis 65°, beträgt.

**16.** System nach Anspruch 13, 14 oder 15, **dadurch gekennzeichnet, dass** das System ferner umfasst:

Einrichtungen zum Entfernen, nachdem die Einrichtungen zum Identifizieren die fehlerhafte Phase identifiziert haben, von Nullstrom, der durch einen möglichen, an der Stromzuleitung (2) auftretenden Erdschluss hervorgerufen und von einem Netzwerkteil außerhalb der Stromzuleitung, d.h. einem Hintergrundnetzwerk, zugeführt worden sein kann, vom Stromwert der fehlerhaften Phase bzw.
Einrichtungen zum Entfernen, nachdem die Einrichtungen zum Identifizieren die fehlerhafte Phase identifiziert haben, des Nullstroms, der durch einen möglichen, an der Stromzuleitung (2) auftretenden Erdschluss hervorgerufen und von einem Netzwerkteil außerhalb der Stromzuleitung, d.h. einem Hintergrundnetzwerk, zugeführt worden sein kann, vom Stromwert der fehlerhaften Phase und des Nullstroms, der von der Stromzuleitung selbst zugeführt worden ist, von den Stromwerten aller Phasen.

**Revendications**

**1.** Procédé pour détecter une rupture de fil dans un réseau électrique triphasé comprenant au moins une ligne d'alimentation (2) sortant d'un point d'alimentation (1), ce procédé comprenant l'étape consistant à contrôler les valeurs ($I_R$, $I_S$ et $I_T$) de courants de phases (R, S, T) de la ligne d'alimentation ou de quantités correspondant à ceux-ci, **caractérisé par** le procédé comprenant en outre l'étape consistant à détecter qu'une rupture de fil (F) se produit à la ligne d'alimentation si, pendant une durée prédéterminée, la valeur de courant d'une phase chute au-delà d'une valeur limite prédéterminée et si l'angle de phase entre les valeurs de courant des deux autres phases augmente au-delà d'une valeur limite prédéterminée.

**2.** Procédé selon la revendication 1, **caractérisé par** la surveillance des valeurs de courant ($I_R$, $I_S$ et $I_T$) ou les quantités correspondantes des phases (R, S, T) de la ligne d'alimentation (2) jusqu'à ce qu'il soit détecté que la ligne d'alimentation a un défaut asymétrique, de manière qu'il soit détecté qu'une rupture de fil se produit à la ligne d'alimentation si, pendant une durée prédéterminée, la valeur de courant d'une phase a chuté au-delà de la valeur limite prédéterminée et si l'angle de phase entre les valeurs de courant des deux autres phases a augmenté au-delà de la valeur limite prédéterminée.

3. Procédé selon la revendication 2, **caractérisé en ce que** ledit défaut asymétrique est détecté si le changement en valeur absolue de la valeur de courant d'une phase quelconque de la ligne d'alimentation (2) pendant le temps prédéterminé est supérieur à la valeur limite prédéterminée et, de plus, différent des changements correspondants des valeurs absolues des valeurs de courant du reste des phases de la ligne d'alimentation.

4. Procédé selon la revendication 1, 2 ou 3, **caractérisé par** la détection que la ligne d'alimentation (2) a une rupture de fil seulement si, de plus, l'angle entre les valeurs de changement des valeurs de courant desdites deux autres phases est sensiblement différent de 60°, de préférence différent de 55° à 65°.

5. Procédé selon la revendication 2, 3 ou 4, **caractérisé en ce qu'**il comprend en outre l'étape consistant à identifier une phase défectueuse quand il a été détecté que la ligne d'alimentation (2) a un défaut asymétrique, de manière qu'il soit détecté qu'une rupture de fil se produit à la ligne d'alimentation si la valeur de courant de la phase identifiée comme défectueuse pendant le temps prédéterminé a chuté au-delà de la valeur limite prédéterminée et si l'angle de phase entre les valeurs de phase des phases saines a augmenté au-delà de la valeur limite prédéterminée.

6. Procédé selon la revendication 5, **caractérisé par** l'identification comme défectueuse de la phase dont la valeur absolue de la tension a chuté à la moitié ou plus de la valeur de l'état normal de celle-ci ou dont la valeur absolue du changement de la valeur de courant de phase diffère le plus des valeurs absolues des changements correspondants en changements de courant de phase des deux autres phases.

7. Procédé selon la revendication 5 ou 6, **caractérisé par** la détection qu'une rupture de fil se produit à la ligne d'alimentation (2) seulement si, de plus, l'angle entre les valeurs de changement des valeurs de courant des phases saines est sensiblement différent de 60°, de préférence différent de 55° à 65°.

8. Procédé selon la revendication 5, 6 ou 7, **caractérisé en ce qu'**il comprend en outre l'étape consistant, après identification de la phase défectueuse, à
éliminer le courant zéro causé par un éventuel défaut de terre se produisant à la ligne d'alimentation (2) et fourni par une partie de réseau extérieure à la ligne d'alimentation, c'est-à-dire un réseau d'arriére-plan, à partir de la valeur de courant de la phase défectueuse ou
éliminer le courant zéro causé par un éventuel défaut de terre se produisant à la ligne d'alimentation (2) et fourni par une partie de réseau extérieure à la ligne d'alimentation, c'est-à-dire un réseau d'arrière-plan, à partir de la valeur de courant de la phase défectueuse et le courant zéro fourni par la ligne d'alimentation elle-même à partir des valeurs de courant de toutes les phases.

9. Système permettant de détecter une rupture de fil dans un réseau électrique triphasé (R, S, T) comprenant au moins une ligne d'alimentation (2) sortant d'un point d'alimentation (1), le système comprenant
des moyens pour surveiller les valeurs ($I_R$, $I_S$ et $I_T$) des courants de phases de la ligne d'alimentation ou de quantités correspondant à celles-ci, **caractérisés en ce que** le système comprend en outre
des moyens pour détecter qu'une rupture de fil (F) se produit à la ligne d'alimentation si, pendant une durée prédéterminée, la valeur de courant d'une phase chute au-delà d'une valeur limite prédéterminée et si l'angle de phase entre les valeurs de courant augmente au-delà d'une valeur limite prédéterminée.

10. Système selon la revendication 9, **caractérisé en ce que** les moyens de surveillance sont disposés pour surveiller les valeurs de courant ($I_R$, $I_S$ et $I_T$) ou les quantités correspondantes des phases (R, S, T) de la ligne d'alimentation (2) jusqu'à ce que le système détecte que la ligne d'alimentation a un défaut asymétrique et, dans ce cas, les moyens pour détecter qu'une rupture de fil se produit sont disposés pour détecter qu'une rupture de fil se produit à la ligne d'alimentation si, pendant une durée prédéterminée, la valeur de courant d'une phase a chuté au-delà de la valeur limite prédéterminée et si l'angle de phase entre les valeurs de courant des deux autres phases a augmenté au-delà de la valeur limite prédéterminée.

11. Système selon la revendication 10, **caractérisé en ce que** le système comprend des moyens pour détecter ledit défaut asymétrique si le changement en valeur absolue de la valeur de courant d'une phase quelconque de la ligne d'alimentation (2) pendant le temps prédéterminé est supérieur à la valeur limite prédéterminée et, de plus, différent des changements correspondants dans les valeurs absolues des valeurs de courant du reste des phases de la ligne d'alimentation.

12. Système selon les revendications 9, 10 ou 11, **caractérisé en ce que** les moyens pour détecter qu'une rupture de fil se produit sont disposés pour détecter qu'une rupture de fil se produit à la ligne d'alimentation seulement si, de plus, l'angle entre les valeurs de changement des valeurs de courant desdites deux autres phases est sensiblement différent de 60°, de préférence différent de 55° à 65°.

13. Système selon les revendications 10, 11 ou 12, **caractérisé en ce que** le système comprend en outre des moyens pour identifier une phase défectueuse quand le système a détecté que la ligne d'alimentation (2) a un défaut asymétrique, de manière que les moyens pour détecter qu'une rupture de fil se produit sont disposés pour détecter qu'une rupture de fil se produit à la ligne d'alimentation si, pendant le temps prédéterminé, la valeur de courant de la phase identifiée comme défectueuse a chuté au-delà de la valeur limite prédéterminée et si l'angle de phase entre les valeurs de phase des phases saines a augmenté au-delà de la valeur limite prédéterminée.

14. Système selon la revendication 13, **caractérisé en ce que** les moyens pour identifier une phase défectueuse sont disposés pour identifier comme défectueuse la phase dont la valeur absolue de la tension a chuté à la moitié ou plus de la valeur de l'état normal de celle-ci ou dont la valeur absolue du changement dans la valeur de courant de phase diffère le plus des valeurs absolues des changements correspondants dans les changements de courant de phase des deux autres phases.

15. Système selon la revendication 13 ou 14, **caractérisé en ce que** les moyens pour détecter qu'une rupture de fil se produit sont disposés pour identifier qu'une rupture de fil se produit à la ligne d'alimentation (2) seulement si, de plus, l'angle entre les valeurs de changement des valeurs de courant des phases saines est sensiblement différent de 60°, de préférence différent de 55° à 65°.

16. Système selon les revendications 13, 14 ou 15, **caractérisé en ce que** le système comprend en outre des moyens pour éliminer, après que les moyens d'identification ont identifié la phase défectueuse, le courant zéro causé par un éventuel défaut de terre se produisant à la ligne d'alimentation (2) et fourni par une partie de réseau extérieure à la ligne d'alimentation, c'est-à-dire un réseau d'arrière-plan, à partir de la valeur de courant de la phase défectueuse ou
des moyens pour éliminer, après que les moyens d'identification ont identifié la phase défectueuse, le courant zéro causé par un éventuel défaut de terre se produisant à la ligne d'alimentation (2) et fourni par une partie de réseau extérieure à la ligne d'alimentation, c'est-à-dire un réseau d'arrière-plan, à partir de la valeur de courant de la phase défectueuse et le courant zéro fourni par la ligne d'alimentation elle-même à partir des valeurs de courant de toutes les phases.

FIG 1

FIG 2

FIG 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0276181 A

### Non-patent literature cited in the description

- **LEE, R. E ; BISHOP, M. T.** Performance testing of the ratio ground relay on a four-wire distribution feeder. *IEEE Transactions on Power Apparatuses and Systems,* September 1983, vol. PAS-102 (9), 2943-2949

- **JEERINGS, D. I. ; LINDERS, J. R.** Unique aspects of distribution system harmonics due to high impedance ground faults. *IEEE Transactions on Power Deliver,* April 1990, vol. 5 (2), 1086-1094